# EUROPÄISCHE PATENTSCHRIFT

(11) **EP 3 893 687 B1**
(45) Veröffentlichungstag und Bekanntmachung des Hinweises auf die Patenterteilung: **10.08.2022**
(21) Anmeldenummer: 19813838.0
(22) Anmeldetag: 04.12.2019
(51) Int. Cl.: A43B 23/08, A43B 23/17, A43B 23/26, B29C 41/36, B29C 43/00, B29C 43/34, B29C 67/08, A45C 3/00

(54) **PULVERAUFTRAGVORRICHTUNG SOWIE VERFAHREN ZUR HERSTELLUNG VON VERSTEIFUNGSELEMENTEN AUS PULVERFÖRMIGEM MATERIAL**
POWDER APPLICATION DEVICE AND METHOD FOR PRODUCING STIFFENING ELEMENTS FROM PULVEROUS MATERIAL
DISPOSITIF D'APPLICATION DE POUDRE AINSI QUE PROCÉDÉ DE FABRICATION D'ÉLÉMENTS DE RENFORT EN MATÉRIAU PULVÉRULENT

(30) Priorität: 11.12.2018 DE 102018221393
(43) Veröffentlichungstag der Anmeldung: 20.10.2021
(73) Patentinhaber: Rhenoflex GmbH, 67065 Ludwigshafen (DE)
(72) Erfinder: JÄRGER, Henritte, 67259 Heuchelheim bei Frankenthal (DE); AMES, Sebastian, 68169 Mannheim (DE); MILKOVIC, Slavica, Tay Ninh Province, 840000 (VN)
(74) Vertreter: dompatent von Kreisler Selting Werner - Partnerschaft von Patent- und Rechtsanwälten mbB
(86) Internationale Anmeldenummer: PCT/EP2019/083606
(87) Internationale Veröffentlichungsnummer: WO 2020/120243

(56) Entgegenhaltungen:
- WO-A1-2012/059367
- US-A- 1 788 389
- US-A- 2 217 171
- US-A- 5 095 961

## Beschreibung

Die Erfindung betrifft eine Pulverauftragvorrichtung für zumindest teilweise schmelzbares Pulver bzw. pulverförmiges Material auf ein Bereitstellungselement zur Herstellung von Versteifungselementen. Bei den Versteifungselementen handelt es sich insbesondere um Versteifungselemente für Schuhe, Taschen, orthopädische Anwendungen oder dergleichen. Ferner betriff die Erfindung ein Verfahren zur Herstellung derartiger Versteifungselemente aus zumindest teilweise schmelzbarem Pulver.

Derartige Versteifungselemente können beispielsweise mit einer Vorrichtung, wie sie in WO 2012/059367 beschrieben ist, hergestellt werden. Die Herstellung erfolgt derart, dass ein rieselfähiges, zumindest teilweise schmelzbares Pulver in einem Pulverbehälter bevorratet ist und am Auslass des Pulverbehälters eine Schablone vorgesehen ist. Durch die mit einem Schieber verschließbare Schablone rieselt das Pulvermaterial auf ein Förderband. Aufgrund des Vorsehens der Schablone ist es möglich, das Pulver bereits in der gewünschten Grundform bzw. nahe der gewünschten Endform aufzubringen. Anschließend erfolgt ein Zuführen von Druck und/oder Wärme, so dass das Pulver miteinander verbunden wird und entsprechende Versteifungselemente entstehen.

Insbesondere bei Versteifungselementen für Schuhe, und insbesondere zum Schutz der Zehen durch eine Vorderkappe oder im Bereich der Ferse durch eine Hinterkappe, besteht der Wunsch, dass derartige Versteifungselemente unterschiedlich steife Bereiche aufweisen.

Aufgabe der Erfindung ist es, eine geeignete Pulverauftrragvorrichtung sowie ein entsprechendes Verfahren zu schaffen, mit dem Versteifungselemente mit unterschiedlich steifen Bereichen hergestellt werden können.

Die Lösung der Aufgabe erfolgt erfindungsgemäß durch eine Pulverauftragvorrichtung gemäß Anspruch 1 bzw. ein Verfahren gemäß Anspruch 15.

Die erfindungsgemäße Pulverauftragvorrichtung für zumindest teilweise schmelzbares Pulver bzw. pulverförmiges Material dient zum Aufbringen des entsprechenden Materials auf ein Bereitstellungselement zum Herstellen von Versteifungselementen, insbesondere für Schuhe, Taschen, orthopädische Anwendungen oder dergleichen. Bei dem Bereitstellungselement kann es sich um ein Förderband, ein stationäres flächiges Element wie ein Aufnahmeblech oder dergleichen handeln. Die Pulverauftragvorrichtung weist einen Pulverbehälter zur Bevorratung des zumindest teilweise schmelzbaren Pulvers auf. An einem Auslass des Pulverbehälters ist eine Schablone vorgesehen. Diese dient zur Festlegung einer Grund- oder Endform eines herzustellenden Versteifungselements. Das Pulver kann in bevorzugter Ausführungsform aus dem Auslass aufgrund der Schwerkraft herausrieseln. Es sind jedoch auch Förderelemente wie beispielsweise Transportbänder, Transportelemente, ein Luftstrom oder dergleichen möglich. Das Pulver gelangt durch die Schablone auf das Bereitstellungselement. Ferner ist eine Verschlusseinrichtung zum Öffnen und Schließen des Auslasses des Pulverbehälters vorgesehen. Hierbei kann die Verschlusseinrichtung in Förder- bzw. Transportrichtung des Pulvers vor oder hinter der Schablone angeordnet sein. Insbesondere ist die Verschlusseinrichtung als Schieber ausgebildet.

Bevorzugt ist es, dass während des Auftragens des Pulvers auf das Bereitstellungselement zwischen dem Bereitstellungselement und dem Auslass des Pulverbehälters bzw. der Schablone keine Relativbewegung herrscht. Dies ist bei einem als Transportband ausgebildeten Bereitstellungselement beispielsweise dadurch möglich, dass das Bereitstellungselement während des Pulverauftrags steht und/oder sich die Pulverauftragvorrichtung bzw. zumindest die Schablone bzw. der Auslass des Pulverbehälters in gleicher Geschwindigkeit zu dem als Transportband ausgebildeten Bereitstellungselement bewegt. Nach dem Aufbringen bzw. Auftragen des Pulvers auf das als Band oder stationäres Element ausgebildete Bereitstellungselement kann das zumindest teilweise schmelzbare Pulver im nächsten Schritt durch Zuführen von Druck und/oder Wärme miteinander verbunden und das entsprechende Versteifungselement ausgebildet werden.

Die erfindungsgemäße Pulverauftragvorrichtung weist zum Ausbilden von Versteifungselementen mit unterschiedlicher Materialstärke bzw. zum Ausbilden von Bereichen unterschiedlicher Steifigkeit mindestens ein Barriereelement auf. Durch das Barriereelement erfolgt ein Verringern der Pulverzufuhr zu dem Bereitstellungselement in entsprechend festgelegten Bereichen. Durch das mindestens eine Barriereelement wird somit die Menge an zugeführtem Pulver in vorgegebenen Bereichen verringert. Hierdurch können Versteifungselemente mit Bereichen mit unterschiedlicher Materialstärke ausgebildet sein, wobei in den durch die Barriereelemente beeinflussten Bereichen eine geringere Materialstärke bzw. Materialdicke erzielt wird. Die Dicke dieser Bereiche ist vorzugsweise 0,2 bis 3 mm, insbesondere 0,3 bis 2,5 mm und besonders bevorzugt 0,35 bis 2,25 mm. Hierbei handelt es sich sodann um Bereiche geringerer Steifigkeit. Das erfindungsgemäß hergestellte Versteifungselement ist vorzugsweise aus einem einzigen Material unterschiedlicher Dicke und insbesondere einstückig ausgebildet.

Als Barriereelemente können Lenkbleche, Gitter, Stifte, Stege oder dergleichen vorgesehen sein. Diese sind ggf. in Förderrichtung des Pulvers vor der Schablone und/oder auch in der Schablonenebene angeordnet.

Besonders bevorzugt ist es, dass die Barriereelemente mit der Schablone verbunden, vorzugsweise mit dieser einstückig ausgebildet sind. Dies hat den Vorteil, dass zum Herstellen unterschiedlicher Versteifungselemente auf einfache Weise die Schablone zusammen mit den entsprechenden Barriereelementen ausgewechselt werden kann. Hierbei ist es bevorzugt, dass als Barriereelemente Stege mit der Schablone verbunden sind.

Insbesondere ist es bevorzugt, dass zur Ausbildung eines Bereichs geringerer Materialstärke mehrere Barriereelemente, insbesondere mehrere Stege vorgesehen sind. Bei beispielsweise als Stege oder Stifte ausgebildeten Barriereelementen ist es des Weiteren bevorzugt, dass diese im Wesentlichen parallel zueinander verlaufen und/oder gitterförmig ausgebildet sind. Beispielsweise ist es möglich, entsprechende Barriereelemente wie Stege am Rand der Schablone vorzusehen, so dass Versteifungselemente mit Bereichen geringerer Materialstärke bzw. geringerer Steifigkeit im Randbereich hergestellt werden können. Der entsprechende Randbereich ist vorzugsweise teilweise, insbesondere vollständig umlaufend ausgebildet.

Besonders bevorzugt ist es, dass der Pulverauftrag derart erfolgt, dass auf dem Bereitstellungselement und dem Transportband auch im Bereich des mindestens einen Barriereelements eine vorzugsweise vollständig geschlossene Materialschicht ausgebildet ist. Die Barriereelemente dienen somit dazu, dass eine geringere Menge an Pulver auf das Bereitstellungselement gelangt bzw. auf dieses rieselt. Aufgrund der Körnigkeit des Pulvers kann bei entsprechender Anordnung der Barriereelemente und dergleichen gewährleistet werden, dass das Pulver zusammenfließt bzw. zusammenrieselt, so dass die Bereiche geringer Materialstärke ausgebildet sind. Dies muss nicht durchgehend erfolgen, vielmehr ist es auch möglich, dass Bereiche ausgebildet werden, in denen kein Pulvermaterial vorgesehen ist. Bevorzugt ist es jedoch, dass eine vollständig geschlossene Materialschicht mit unterschiedlicher Materialdicke ausgebildet wird.

Eine vorzugsweise vollständig geschlossene Materialschicht auch im Bereich der Barriereelemente kann durch geeignete Wahl der Rieselfähigkeit des Pulvers und/oder der Form des bzw. der Barriereelemente und/oder des Abstands zwischen der Schablone und dem Bereitstellungselement und/oder einer Zeitspanne der Pulverzufuhr erfolgen. Ggf. ist es beispielsweise auch möglich, während der Pulverzufuhr die Schablone und/oder das Bereitstellungselement zu rütteln, um ein Zusammenfließen bzw. Zusammenrieseln des Pulvers auch in den durch die Barriereelemente freien Bereichen zu gewährleisten.

Die Form der Barriereelemente kann beispielsweise bei Stegen oder dergleichen derart ausgebildet sein, dass sich diese in Förder- bzw. Rieselrichtung des Pulvers verjüngen. Insbesondere können die Barriereelemente einen dreieckigen Querschnitt aufweisen. Auch ist es möglich, dass die beispielsweise als Stege oder Lenkbleche ausgebildeten Barriereelemente geneigt sind, so dass das Pulver auch in den durch die Barriereelemente abgedeckten Bereich rieselt, jedoch hier eine geringere Materialstärke ausbildet. Auch Stege, die in Draufsicht eine beispielsweise variable Breite aufweisen, können zur Erreichung einer geschlossenen Materialschicht vorteilhaft sein. Insbesondere können die Stege in unterschiedlichen Bereichen der Schablone unterschiedliche Formen, Breiten, Abstände etc. aufweisen, um die Materialstärke bzw. die Menge an zugeführtem Pulver zu definieren

Der Abstand zwischen der Schablone und dem Bereitstellungselement ist vorzugsweise möglichst gering und liegt insbesondere im Bereich von 0,1 mm bis 0,5 mm.

Die Rieselfähigkeit des verwendeten Pulvers liegt vorzugsweise im Bereich von 20 - 30 Sekunden gemessen mit einer 10 mm Düse nach EN ISO 6186.

Als Material zur Herstellung der erfindungsgemäßen Versteifungselemente ist insbesondere pulverförmiger thermoplastischer Kunststoff geeignet. Dieser kann beispielsweise durch Vermahlen von Granulat hergestellt werden. Eine bevorzugte Pulvergröße liegt im Bereich von 50 µm bis 900 µm, vorzugsweise 50 µm bis 600 µm.

Ferner betrifft die Erfindung ein Verfahren zur Herstellung von Versteifungselementen, insbesondere für Schuhe, Taschen, orthopädische Anwendungen oder dergleichen. Das erfindungsgemäße Verfahren wird in besonders bevorzugter Ausführungsform mit der vorstehend beschriebenen erfindungsgemäßen Pulverauftragvorrichtung durchgeführt, wobei die vorstehend anhand der Pulverauftragvorrichtung beschriebenen Verfahrensweisen bevorzugt sind.

Bei dem erfindungsgemäßen Verfahren zur Herstellung von Versteifungselementen wird Pulver auf ein Bereitstellungselement in einer Grund- bzw. Endform des herzustellenden Versteifungselements aufgebracht. Hierbei erfolgt das Aufbringen derart, dass bereichsweise weniger Pulver aufgebracht wird, so dass Bereiche des Versteifungselements mit geringerer Materialstärke ausgebildet werden. Anschließend kann ein Verbinden des Pulvers durch Wärme und/oder Druck erfolgen.

Bevorzugt ist es, dass das Pulver aus einem Pulverbehälter über eine Schablone, die im Wesentlichen die Außenabmessungen der Grund- bzw. Endform aufweist, auf das Bereitstellungselement aufgebracht wird. Bevorzugt ist hierbei die Verwendung der vorstehend beschriebenen Barriereelemente, die besonders bevorzugt mit der Schablone verbunden sind. In besonders bevorzugter Weiterbildung der Erfindung erfolgt der Pulverauftrag derart, dass auf dem Bereitstellungselement auch im Bereich des mindestens einen Barriereelements eine vorzugsweise vollständig geschlossene Materialschicht ausgebildet wird. Dies kann, wie vorstehend anhand der Pulverauftragvorrichtung beschrieben, vorzugsweise durch geeignete Rieselfähigkeit des Pulvers und/oder die Form des bzw. der Barriereelemente und/oder des Abstands zwischen der Schablone und dem Bereitstellungselement und/oder der Zeitspanne der Pulverzufuhr gewährleistet werden.

Besonders bevorzugt ist es, dass ein Versteifungselement ausgebildet wird, das in einem Randbereich eine geringere Materialstärke und somit eine geringere Steifigkeit aufweist. Insbesondere ist der Randbereich vollständig umlaufend ausgebildet.

Das Versteifungselement, das insbesondere für Schuhe, Taschen, orthopädische Anwendungen oder dergleichen geeignet ist, weist Bereiche unterschiedlicher Materialstärke auf.

Das Versteifungselement ist nach dem vorstehend beschriebenen Verfahren hergestellt, wobei es bevorzugt ist, dass hierzu die vorstehend beschriebene Pulverauftragvorrichtung verwendet wird. Bevorzugt ist es hierbei, dass das Versteifungselement aus ein und demselben Material hergestellt ist und die Bereiche unterschiedlicher Materialstärke nicht durch ein mehrschichtiges Material erzeugt werden. Das Versteifungselement ist daher vorzugsweise einstückig ausgebildet. Insbesondere erfolgt das Herstellen des Versteifungselements durch das Verbinden von zumindest teilweise schmelzbarem Pulver, das bereits vor dem Verbinden des Pulvers durch Druck und/oder Wärme unterschiedlich dicke Bereiche aufweist.

Nachfolgend wird die Erfindung anhand bevorzugter Ausführungsformen unter Bezugnahme auf die anliegenden Zeichnungen näher erläutert.

Es zeigen:

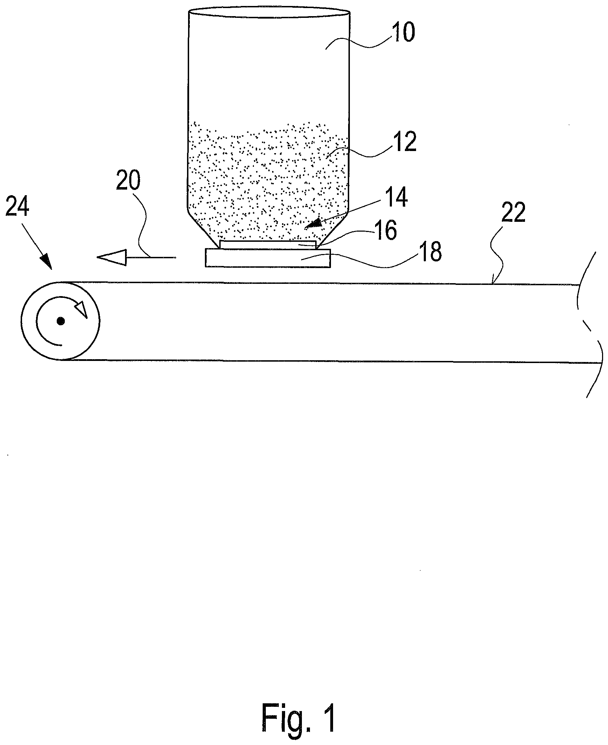

- Fig. 1: eine schematische Seitenansicht einer erfindungsgemäßen Pulverauftragvorrichtung,
- Fig. 2-5: schematische Draufsichten unterschiedlicher Schablonen,
- Fig. 6: eine Schnittansicht von Stegen einer Schablone einer bevorzugten Ausführungsform, und
- Fig. 7: eine Schnittansicht von Stegen einer Schablone einer weiteren bevorzugten Ausführungsform.

Eine Pulverauftragvorrichtung weist einen Pulverbehälter 10 auf, in dem zumindest teilweise schmelzbares Pulver 12 angeordnet ist. An einem Auslass 14 des Pulverbehälters 10 ist eine Schablone 16 angeordnet. Zum Öffnen und Schließen des Auslasses 14 ist eine im dargestellten Ausführungsbeispiel als Schieber 18 ausgebildete Verschlusseinrichtung vorgesehen. Durch Öffnen des Schiebers 18 in Richtung eines Pfeils 20 rieselt Pulver 12 aufgrund der Schwerkraft durch die Schablone 16 auf eine Oberseite 22 eines Bereitstellungselements 24, bei dem es sich im dargestellten Ausführungsbeispiel um ein Förderband handelt.

Um ein Aufbringen des Pulvers 12 nahe der Grund- bzw. Endform eines herzustellenden Versteifungselements auf der Oberseite 22 des Förderbands 24 zu ermöglichen, wird das Förderband 24 beispielsweise bei geöffnetem Schieber 18 angehalten.

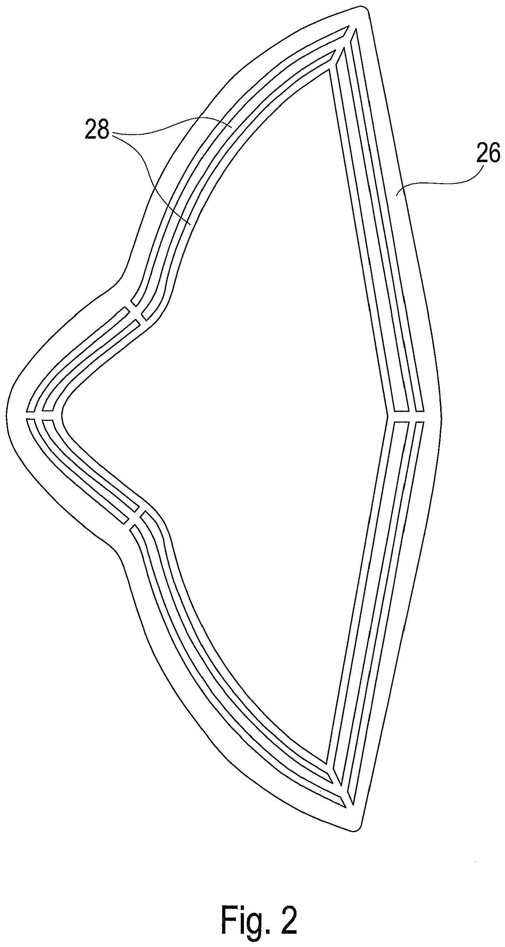

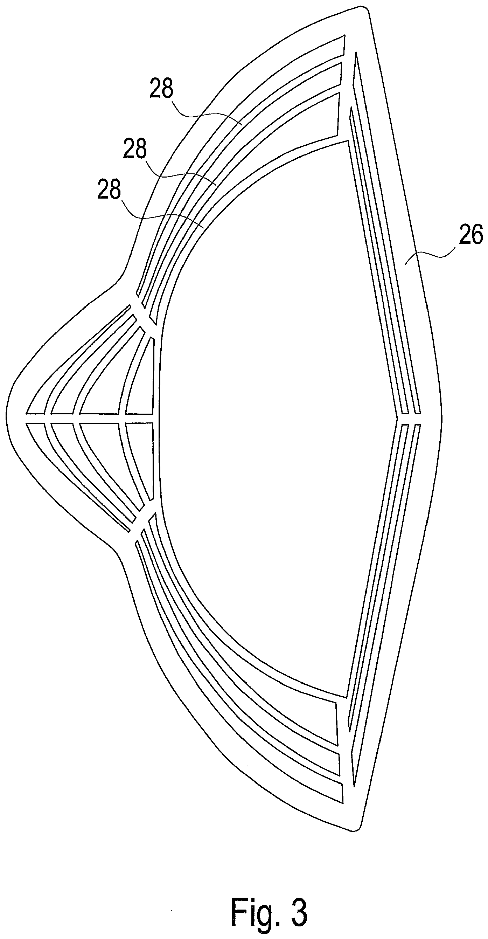

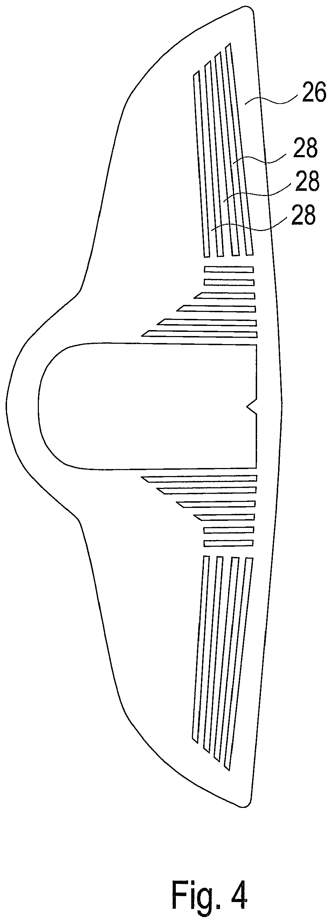

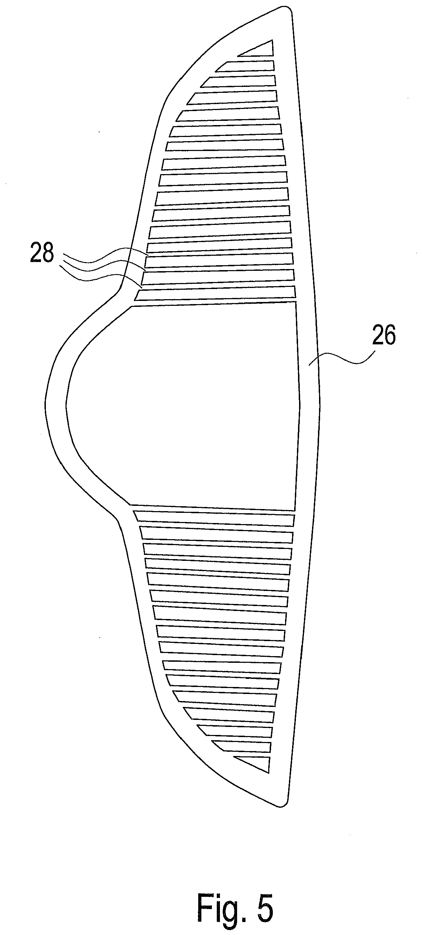

Bei den in den Figuren 2-5 dargestellten unterschiedlichen Ausführungsformen der Schablonen 14 sind ähnliche und identische Bauteile mit denselben Bezugszeichen gekennzeichnet.

Die Schablonen weisen jeweils ein umlaufendes Randelement 26 auf, das insbesondere zur Befestigung an einer entsprechenden Halterung im Auslass 14 des Pulverbehälters 10 dient. Mit dem rahmenförmigen Element 26 sind als Stege ausgebildete Barriereelemente 28 verbunden.

Im Bereich der Barriereelemente 28 rieselt weniger Pulver 12 auf die Oberseite 22 des Förderbands 24. Es entstehen hierdurch Versteifungselemente mit unterschiedlicher Materialstärke bzw. -dicke. Zur Fertigstellung der Verstärkungselemente wird das Pulver miteinander durch Aufbringen von Druck und/oder Wärme verbunden.

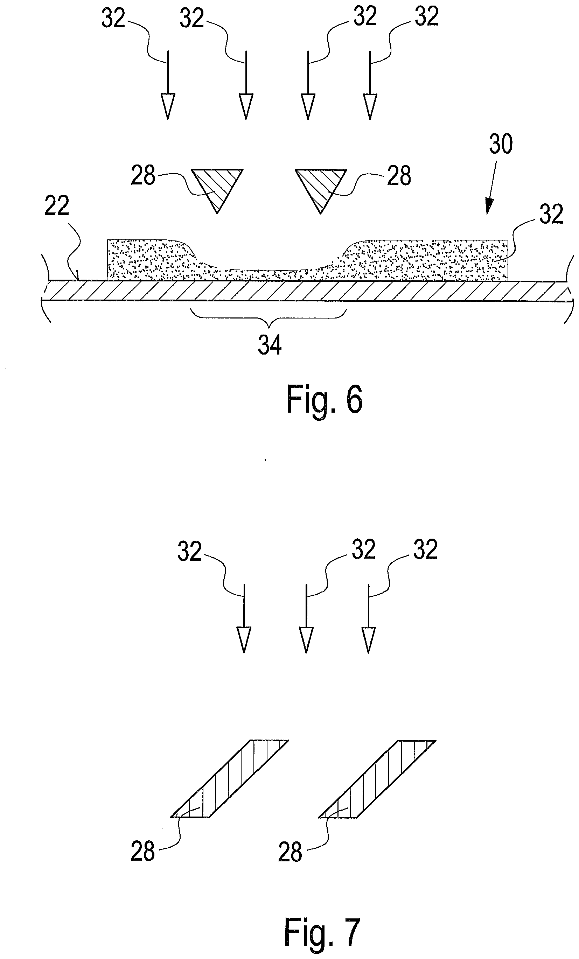

Um in den Bereichen der Barriereelemente 28 eine unterschiedliche Pulvermaterialdicke zu gewährleisten, andererseits aber eine geschlossene Pulverschicht auf die Oberseite 22 des Förderbands 24 aufzubringen, können die Stege 28 beispielsweise einen dreieckigen Querschnitt (Fig. 6) aufweisen. Hierdurch wird auf einer Oberseite 22 des Förderbands 24 zur Ausbildung eines Versteifungselements 30 Pulvermaterial 12 derart aufgetragen, dass in Rieselrichtung 32 unterhalb der Barriereelemente 28 ein Bereich 34 mit einer geringeren Materialstärke ausgebildet ist.

Die als Stege ausgebildeten Barriereelemente 28 können beispielsweise auch, wie in Fig. 7 dargestellt, gegenüber einer Rieselrichtung 32 geneigt sein.

## Patentansprüche

1. Pulverauftragvorrichtung für zumindest teilweise schmelzbares Pulver auf ein Bereitstellungselement (24) zur Herstellung von Versteifungselementen (30) für Schuhe, Taschen, orthopädische Anwendung oder dergleichen, mit
einem Pulverbehälter (10),
einer an einem Auslass (14) des Pulverbehälters (10) vorgesehenen Schablone (16) zur Festlegung einer Grundform eines herzustellenden Versteifungselements (30) und
einer Verschlusseinrichtung (18) zum Öffnen und Schließen des Auslasses (14),
**gekennzeichnet durch**
mindestens ein Barriereelement (28) zur Verringerung der Pulverzufuhr zu dem Bereitstellungselement (24) zur Ausbildung von Bereichen (34) des Versteifungselements (30) mit geringerer Materialstärke.

2. Pulverauftragvorrichtung nach Anspruch 1, **dadurch gekennzeichnet, dass** das mindestens eine Barriereelement (28) mit der Schablone (16) verbunden ist.

3. Pulverauftragvorrichtung nach Anspruch 1 oder 2, **dadurch gekennzeichnet, dass** das mindestens eine Barriereelement (28) Stege aufweist.

4. Pulverauftragvorrichtung nach einem der Ansprüche 1-3, **dadurch gekennzeichnet, dass** mehrere Barriereelemente (28) zur Ausbildung eines Bereichs des Versteifungselements (30) mit geringerer Materialstärke dienen.

5. Pulverauftragvorrichtung nach einem der Ansprüche 1-4, **dadurch gekennzeichnet, dass** mehrere Stege (28) zueinander parallel und/oder gebogen sind.

6. Pulverauftragvorrichtung nach einem der Ansprüche 1-5, **dadurch gekennzeichnet, dass** der Bereich (34) geringerer Materialstärke als zumindest teilweise, insbesondere vollständig umlaufender Randbereich ausgebildet ist.

7. Pulverauftragvorrichtung nach einem der Ansprüche 1-6, **dadurch gekennzeichnet, dass** der Pulverauftrag derart erfolgt, dass auf dem Bereitstellungselement (24) auch im Bereich des mindestens einen Barriereelements (28) eine vorzugsweise vollständig geschlossene Materialschicht ausgebildet ist.

8. Pulverauftragvorrichtung nach Anspruch 7, **dadurch gekennzeichnet, dass** die vorzugsweise vollständig geschlossene Materialschicht erzielt wird durch die Rieselfähigkeit des Pulvers (12) und/oder die Form des mindestens einen Barriereelements (28) und/oder den Abstand zwischen der Schablone (16) und einer Oberseite (22) des Bereitstellungselements (24) und/oder eine Zeitspanne der Pulverzufuhr.

9. Pulverauftragvorrichtung nach einem der Ansprüche 1-8, **dadurch gekennzeichnet, dass** das mindestens eine Barriereelement (28) in Förderrichtung (32) des Pulvers (12) sich verjüngend ausgebildet ist.

10. Pulverauftragvorrichtung nach einem der Ansprüche 1-9, **dadurch gekennzeichnet, dass** das mindestens eine Barriereelement (28) in Förderrichtung (32) des Pulvers (12) geneigt ist.

11. Pulverauftragvorrichtung nach einem der Ansprüche 1-10, **dadurch gekennzeichnet, dass** das mindestens eine Barriereelement (28) insbesondere quer zur Förderrichtung (32) eine variable Breite aufweist.

12. Pulverauftragvorrichtung nach einem der Ansprüche 1-11, **dadurch gekennzeichnet, dass** der Abstand zwischen der Schablone (16) und einer Oberseite (22) des Bereitstellungselements (24) zwischen 0,1 mm und 0,5 mm beträgt.

13. Pulverauftragvorrichtung nach einem der Ansprüche 1-12, **dadurch gekennzeichnet, dass** die Rieselfähigkeit des Pulvers (12) 20-30 Sekunden gemessen mit einer 10 mm Düse gemäß EN ISO 6186 beträgt.

14. Pulverauftragvorrichtung nach einem der Ansprüche 1-13, **dadurch gekennzeichnet, dass** das Bereitstellungselement (24) ein Förderband aufweist.

15. Verfahren zur Herstellung von Versteifungselementen, insbesondere für Schuhe, Taschen, orthopädische Anwendungen oder dergleichen aus zumindest teilweise schmelzbarem Pulver, insbesondere mit einer Pulverauftragvorrichtung nach einem der Ansprüche 1-14,
bei welchem Pulver (12) auf ein Bereitstellungselement (24) in der Grundform des herzustellenden Versteifungselements (30) aufgebracht wird, wobei bereichsweise weniger Pulver zur Ausbildung von Bereichen (34) des Versteifungselements (30) mit geringerer Materialstärke aufgebracht wird.

16. Verfahren nach Anspruch 15, bei welchem das Pulver aus einem Pulverbehälter (10) über eine Schablone (16) auf das Bereitstellungselement (24) aufgebracht wird.

17. Verfahren nach Anspruch 15 oder 16, bei welchem das Pulver derart aufgetragen wird, dass auf dem Bereitstellungselement (24) auch im Bereich des mindestens einen Barriereelements (28) eine vorzugweise vollständig geschlossene Materialschicht ausgebildet wird.

18. Verfahren nach einem der Ansprüche 15-17, bei welchem die vorzugsweise vollständig geschlossene Materialschicht erzielt wird durch die Rieselfähigkeit des Pulvers (12) und/oder die Form des mindestens einen Barriereelements (28) und/oder den Abstand zwischen der Schablone (16) und einer Oberseite (22) des Bereitstellungselements (24) und/oder eine Zeitspanne der Pulverzufuhr.

## Claims

1. A powder application apparatus for an at least partially meltable powder to be applied onto a feeding element (24) for producing reinforcing elements (30) for shoes, bags, orthopedic applications or the like, comprising
a powder container (10),
a template (16) provided at an outlet (14) of the powder container (10) for defining a basic shape of a reinforcing element (30) to be produced, and
a closing means (18) for opening and closing the outlet (14),
**characterized by**
at least one barrier element (28) for reducing the powder supply to the feeding element (24) for creating areas (34) of the reinforcing element (30) having a smaller material thickness.

2. The powder application apparatus according to claim 1, **characterized in that** the at least one barrier element (28) is connected with the template (16).

3. The powder application apparatus according to claim 1 or 2, **characterized in that** the at least one barrier element (28) comprises webs.

4. The powder application apparatus according to any one of claims 1-3, **characterized in that** a plurality of barrier elements (28) serve for creating an area of the reinforcing element (30) having a smaller material thickness.

5. The powder application apparatus according to any one of claims 1-4, **characterized in that** a plurality of webs (28) extend in parallel to each other and/or are bent.

6. The powder application apparatus according to any one of claims 1-5, **characterized in that** the area (34) of a smaller material thickness is configured as an at least partially, in particular completely circumferential edge area.

7. The powder application apparatus according to any one of claims 1-6, **characterized in that** the powder is applied such that on the feeding element (24), even in the area of the at least one barrier element (28), a preferably completely closed material layer is formed.

8. The powder application apparatus according to claim 7, **characterized in that** the preferably completely closed material layer is realized by the flowability of the powder (12) and/or the shape of the at least one barrier element (28) and/or the distance between the template (16) and an upper surface (22) of the feeding element (24) and/or a time period of the powder supply.

9. The powder application apparatus according to any one of claims 1-8, **characterized in that** the at least one barrier element (28) tapers in the conveying direction (32) of the powder (12).

10. The powder application apparatus according to any one of claims 1-9, **characterized in that** the at least one barrier element (28) is inclined in the conveying direction (32) of the powder (12).

11. The powder application apparatus according to any one of claims 1-10, **characterized in that** the at least one barrier element (28) has a variable width in particular transversely to the conveying direction (32).

12. The powder application apparatus according to any one of claims 1-11, **characterized in that** the distance between the template (16) and an upper surface (22) of the feeding element (24) ranges between 0.1 mm and 0.5 mm.

13. The powder application apparatus according to any one of claims 1-12, **characterized in that** the flowability of the powder (12) is 20-30 seconds, measured with a 10 mm nozzle as per EN ISO 6186.

14. The powder application apparatus according to any one of claims 1-13, **characterized in that** the feeding element (24) comprises a conveyor belt.

15. A method for producing reinforcing elements, in particular for shoes, bags, orthopedic applications or the like from an at least partially meltable powder, in particular using a powder application apparatus according to any one of claims 1-14,
wherein a powder (12) is applied, in the basic shape of the reinforcing element (30) to be produced, onto a feeding element (24), wherein less powder is applied in certain areas for producing areas (34) of the reinforcing element (30) having a smaller material thickness.

16. The method according to claim 15, wherein the powder is applied from a powder container (10) via a template (16) onto the feeding element (24).

17. The method according to claim 15 or 16, wherein the powder is applied such that on the feeding element (24), even in the area of the at least one barrier element (28), a preferably completely closed material layer is formed.

18. The method according to any one of claims 15-17, wherein the preferably completely closed material layer is realized by the flowability of the powder (12) and/or the shape of the at least one barrier element (28) and/or the distance between the template (16) and an upper surface (22) of the feeding element (24) and/or a time period of the powder supply.

## Revendications

1. Dispositif d'application de poudre, pour une poudre pouvant fondre au moins en partie, sur un élément de fourniture (24) pour la fabrication d'éléments de renfort (30) pour chaussures, sacs, application orthopédique ou analogue, comprenant
un contenant de poudre (10),
un gabarit (16) servant à fixer une forme de base d'un élément de renfort (30) à fabriquer, prévu à une sortie (14) du contenant de poudre (10) et
un système de fermeture (18) servant à ouvrir et fermer la sortie (14),
**caractérisé par**
au moins un élément formant barrière (28) pour réduire l'apport en poudre à l'élément de fourniture (24) de sorte que l'élément de renfort (30) soit réalisé avec des zones (34) présentant une épaisseur de matériau réduite.

2. Dispositif d'application de poudre selon la revendication 1, **caractérisé en ce que** ledit au moins un élément formant barrière (28) est relié au gabarit (16).

3. Dispositif d'application de poudre selon la revendication 1 ou 2, **caractérisé en ce que** ledit au moins un élément formant barrière (28) comprend des nervures.

4. Dispositif d'application de poudre selon l'une quelconque des revendications 1 à 3, **caractérisé en ce que** plusieurs éléments formant barrière (28) servent à réaliser une zone de l'élément de renfort (30) avec une épaisseur de matériau plus petite.

5. Dispositif d'application de poudre selon l'une quelconque des revendications 1 à 4, **caractérisé en ce que** plusieurs nervures (28) sont parallèles et/ou incurvées les unes par rapport aux autres.

6. Dispositif d'application de poudre selon l'une quelconque des revendications 1 à 5, **caractérisé en ce que** la zone (34) avec une épaisseur de matériau réduite est conçue sous la forme d'une zone de bord au moins partiellement, en particulier complètement circonférentielle.

7. Dispositif d'application de poudre selon l'une quelconque des revendications 1 à 6, **caractérisé en ce que** l'application de poudre survient de telle sorte qu'une couche de matériau, de préférence complètement fermée, soit également réalisée sur l'élément de fourniture (24) dans la zone dudit au moins un élément formant barrière (28).

8. Dispositif d'application de poudre selon la revendication 7, **caractérisé en ce que** la couche de matériau, de préférence complètement fermée, est obtenue via l'aptitude à l'écoulement de la poudre (12) et/ou la forme dudit au moins un élément formant barrière (28) et/ou la distance entre le gabarit (16) et une face supérieure (22) de l'élément de fourniture (24) et/ou par une durée de l'alimentation en poudre.

9. Dispositif d'application de poudre selon l'une quelconque des revendications 1 à 8, **caractérisé en ce que** ledit au moins un élément formant barrière (28) est réalisé de manière à se rétrécir dans la direction de transport (32) de la poudre (12).

10. Dispositif d'application de poudre selon l'une quelconque des revendications 1 à 9, **caractérisé en ce que** ledit au moins un élément formant barrière (28) est incliné dans la direction de transport (32) de la poudre (12).

11. Dispositif d'application de poudre selon l'une quelconque des revendications 1 à 10, **caractérisé en ce que** ledit au moins un élément formant barrière (28) présente une largeur variable, en particulier transversalement à la direction de transport (32).

12. Dispositif d'application de poudre selon l'une quelconque des revendications 1 à 11, **caractérisé en ce que** la distance entre le gabarit (16) et une face supérieure (22) de l'élément de fourniture (24) est comprise entre 0,1 mm et 0,5 mm.

13. Dispositif d'application de poudre selon l'une quelconque des revendications 1 à 12, **caractérisé en ce que** l'aptitude à l'écoulement de la poudre (12) est de 20 à 30 secondes mesurée avec une buse de 10 mm selon la norme EN ISO 6186.

14. Dispositif d'application de poudre selon l'une quelconque des revendications 1 à 13, **caractérisé en ce que** l'élément de fourniture (24) comporte une bande transporteuse.

15. Procédé de fabrication d'éléments de renfort, en particulier pour chaussures, sacs, applications orthopédiques ou analogues, à partir d'une poudre pouvant fondre au moins en partie, en particulier à l'aide d'un dispositif d'application de poudre selon l'une quelconque des revendications 1 à 14,
selon lequel de la poudre (12) est appliquée sur un élément de fourniture (24) dans la forme de base de l'élément de renfort (30) à fabriquer, moins de poudre étant appliquée dans certaines zones, pour réaliser des zones (34) de l'élément de renfort (30) avec une épaisseur de matériau réduite.

16. Procédé selon la revendication 15, selon lequel la poudre provenant d'un contenant de poudre (10) est appliquée sur l'élément de fourniture (24) par l'intermédiaire d'un gabarit (16).

17. Procédé selon la revendication 15 ou 16, selon lequel la poudre est appliquée de telle sorte qu'une couche de matériau de préférence complètement fermée soit réalisée sur l'élément de fourniture (24) également dans la zone dudit au moins un élément formant barrière (28).

18. Procédé selon l'une quelconque des revendications 15 à 17, selon lequel la couche de matériau, de préférence complètement fermée, est obtenue par l'aptitude à l'écoulement de la poudre (12) et/ou la forme dudit au moins un élément formant barrière (28) et/ou la distance entre le gabarit (16) et une face supérieure (22) de l'élément de fourniture (24) et/ou une durée de l'alimentation en poudre.
